# EUROPEAN PATENT APPLICATION

(11) **EP 4 047 970 A1**
(43) Date of publication of application: **24.08.2022**
(21) Application number: 21158626.8
(22) Date of filing: 23.02.2021
(51) Int. Cl.: H04W 12/06

(54) **METHOD FOR ACCESSING A CLOUD CONTENT VIA A SMART TV**

(71) Applicant: Deutsche Telekom AG, 53113 Bonn (DE)
(72) Inventor: DAMM, Rickard, 53175 Bonn (DE)
(74) Representative: Raible Deissler Lehmann Patentanwälte PartG mbB

(57) **Abstract**

A method for accessing a cloud content via a smart tv, comprising the steps: a digital content provided by a cloud service and requiring an authentication of a user is selected by the user from a tv home page displayed on a screen of a smart tv of the user by operating a remote control associated with the smart tv; a tv service agent associated with the smart tv, upon the user's selection, automatically provides the cloud service with an authenticating token associated with the user and the selected digital content; and the smart tv, upon a successful authentication, accesses the selected digital content and displays the digital content on the screen, and a computer program product for accessing a digital content via a smart tv.

## Description

The invention relates to a method for accessing a cloud content via a smart tv. The method comprises the steps: a digital content provided by a cloud service and requiring an authentication of a user is selected by the user from a tv home page displayed on a screen of a smart tv of the user by operating a remote control associated with the smart tv; a tv service agent associated with the smart tv, upon the user's selection, automatically provides the cloud service with an authenticating token associated with the user and the selected digital content; and the smart tv, upon a successful authentication, accesses the selected digital content and displays the digital content on the screen. The invention further relates to computer program product for accessing a digital content via a smart tv.

The invention is specified by independent claim 1. Embodiments of the invention are specified by the dependent claims.

Methods for accessing a cloud content via a smart tv are known in the state of the art, e.g. methods for using Amazon prime, Netflix, Magenta TV and the like. Cloud content is considered to be any digital content which is accessible by a terminal device via a communication network. Particularly, a smart tv may be and is often used as the terminal device for accessing a digital content provided by a cloud service, i.e. a service located in a service cloud.

Usually, accessing a cloud content requires a user of the cloud content to initially authenticate towards the cloud service providing the digital content to be accessed, i.e. manually enter account data, e.g. a user name and a password, and transmit the entered account data to the cloud service for authentication.

The smart tv is to be considered any television device capable of connecting with the service cloud via a communication network, particularly via the internet. The smart tv is traditionally accompanied by a remote control for operating the smart tv from a distance, e.g. while sitting on a couch or an easy chair being arranged distant from the smart tv. However, manually entering the account data by means of the remote control for accessing the cloud content is very tedious and erroneous due to the rather poor operability of the remote control.

It would be desirable, hence, to allow the user for an easier and more comfortable access to the cloud content via the smart tv.

It is, therefore, an object of the invention to suggest a method for accessing a cloud content via a smart tv which facilitates access to a digital content provided by a cloud service via a smart tv. Another object of the invention is a computer program product for accessing a cloud content via a smart tv.

One aspect of the invention is a method for accessing a digital content via a smart tv, comprising the steps: a digital content provided by a cloud service and requiring an authentication of a user is selected by the user from a tv home page displayed on a screen of a smart tv of the user by operating a remote control associated with the smart tv; a tv service agent associated with the smart tv, upon the user's selection, automatically provides the cloud service with an authenticating token associated with the user and the selected digital content; and the smart tv, upon a successful authentication, accesses the selected digital content and displays the digital content on the screen. The remote control is associated with the smart tv for remotely, e.g. wirelessly, operating the smart tv. The tv home page may also be called a tv portal or a tv home screen and is usually displayed on the screen of the smart tv after switching on the smart tv or pressing a predetermined button of the remote control, e.g. a so-called home button.

The tv home page comprises a plurality of menu items each of which the user may select by accordingly operating the remote control. The menu items comprise an item associated with the cloud service providing the digital content to be displayed on the screen of the smart tv. When the user selects the item, the digital content provided by the cloud service is displayed on the screen of the smart tv.

The digital content may comprise text content, pictures, audio streams, video streams and the like. The digital content may, e.g., comprise a map showing a location of a user's dog wearing a locating collar, the locating collar communicating with a pet tracking service as the cloud service and the map being generated by the pet tracking service as the digital content.

As the digital content may be only accessed after authenticating the user, the smart tv automatically, i.e. without an additional particular action of the user, authenticates the user towards the cloud service before accessing and displaying the digital content on the screen. Authentication of the user may be accomplished by transmitting an authenticating token, i.e. data for authenticating. The authenticating token is associated both with the cloud service and with the user, i.e. the authenticating token is accepted by the cloud service as an authentication of the user.

The tv service agent may be provided by a tv service cloud and/or by the smart tv. For example, the tv service agent may implement OAuth for complying with the method, i.e. the method may be based on the open standard tool OAuth which allows for delegating an access between different services, e.g. cloud services or websites. Herein, OAuth may be used for delegating an access between the tv service agent, the cloud service and the app installed on the mobile device and associated with the cloud service.

According to the invention the tv service agent, upon a first selection of the digital content, is provided with the authenticating token by operating a mobile device of the user. For authenticating the user towards the cloud service, the tv service agent has to be provided first with the authenticating token. When the user selects the cloud service providing the digital content for the first time, the user operates the mobile device, e.g. a smart phone, a tablet, a notebook or the like, for providing the tv service agent with the authenticating token required by the cloud service. Operating the mobile device is easier and more comfortable than operating the remote control associated with the smart tv. Apart from that, an authentication of the user is more reliable, i.e. safer, involving two different devices, i.e. the smart tv and the mobile device, of the user instead of a single device.

In similar embodiments a system comprising a set top box (STB) and a tv carry out the method together as the smart tv. The tv may be a traditional tv which, on its own, is not capable of connecting to the service cloud. However, the tv may be enabled for connecting to the service cloud by means of the set top box connected thereto, the set top box being capable of connecting to the service cloud. Thus, a combination of a traditional tv with a set top box is considered to be a smart tv herein. Of course, a combination of a smart tv with a set top box, i.e. a smart tv provided with an additional capability of connecting to the service cloud, is also within the scope of the invention.

Preferably, operating the mobile device of the user comprises capturing a QR code displayed on the screen of the smart tv. QR (Quick Response) codes are a proven, reliable and easy to handle means for visually transmitting data over media boundaries. Herein, the QR code is used for transmitting data from the screen of the smart tv to the mobile device. The QR code provides the mobile device with data sufficient for accomplishing the authentication of the user and, thus, decouples authentication of the user from the smart tv, particularly releases the user from operating the remote control for authentication.

The QR code may be captured by a generic QR code capturing app installed on the mobile device, the generic QR code capturing app may open an internet browser installed on the mobile device displaying an authentication page of the tv service agent located by the QR code and the user may transmit authenticating data to the tv service agent by manually entering authenticating data on the authentication page. Using the generic QR code capturing app, i.e. a generic app for capturing a QR code, and an authentication page displayed by the internet browser can do without modifying the cloud service or an app associated with the cloud service and installed on the mobile device. However, the user is required to manually enter the authenticating data for accomplishing the authentication.

Alternatively, the QR code may be captured by a specific app installed on the mobile device and associated with the cloud service for accessing the digital content and the specific app may automatically transmit authenticating data of the logged-in user to the tv service agent. This embodiment of the invention is based on a modified cloud service and a modified specific app associated with the cloud service and installed on the mobile device. In return, the user is not required to additionally enter authenticating data for accomplishing the authentication as the user is already logged into the specific app, i.e. has already accomplished an authentication.

The specific app may require the user to manually enter additional authenticating data and automatically transmit the additional authenticating data to the tv service agent. The additional authenticating data increases a safety of the authentication, but, on the other hand, reduces a comfort of the user.

In a preferred embodiment, both the smart tv and the mobile device are simultaneously and wirelessly connected to a single WLAN and the tv service agent verifies the received authenticating data by comparing an IP address of the smart tv and an IP address of the mobile device. The simultaneous connection of the smart tv and the mobile device to the same single WLAN confirms that both the smart tv and the mobile device are arranged at the user's place. The verification based on the IP address increases a safety of the authentication without reducing a comfort of the user. Of course, the smart tv and the mobile device may alternatively be simultaneously connected to a same single router via a wire for a verification of the IP addresses.

Advantageously, the QR code is generated by the tv service agent. The tv service agent may be provided by a tv service cloud provided by a manufacturer of the smart tv of by the smart tv.

The tv service agent particularly generates the QR code as a unique QR code comprising an enriched URL (unique resource locator). The unique QR code may be generated by enriching an URL associated with the tv service agent by extending the URL with a unique identifier. The unique identifier may comprise a timestamp, a random number, unique user data, e.g. a unique subscriber ID, and the like. More particularly, the QR code may be valid for a predetermined limited duration, i.e. the QR code automatically expires after the predetermined limited duration. An automatic expiry of the QR code hinders any misuse of the QR code.

In an embodiment, the tv service agent allows for displaying the digital content on the screen of the smart tv if and only if both the smart tv and the mobile device are connected to a single WLAN. In other words, the mobile device is required to be connected to the single WLAN each time the digital content is to be displayed. The mobile device keeps on being required for displaying the digital content on the screen of the smart tv even after the initial authentication step. A safety of accessing the digital content is perpetuated for displaying the digital content and, hence, further increased.

Preferably, the authenticating token is renewed after a predetermined period by operating the mobile device. In other words, the authentication has to be regularly repeated each time a predetermined time period expires. Thus, a safety of the authentication is increased and a misuse of the authentication is hindered.

In particularly preferred embodiments, the tv service agent cooperates with a plurality of different cloud services each providing digital content for being selected by the user and being displayed on the screen of the smart tv. The smart tv allows the user for accessing a large amount of digital content. A usage of the smart tv may be strengthened and, in turn, may reduce the usage of the mobile device. For example, watching tv may be interrupted for a short time and at any time for occasionally and comfortably access a private digital content provided by the cloud service, e.g. during a tv commercial.

The digital content being displayed on the screen of the smart tv may be reduced as compared to a corresponding digital content being displayed on a screen of the mobile device. In other words, the smart tv does not completely replace the mobile device in accessing the cloud content. Instead, the digital content may comprise a reduced functionality in order to not offer any functionality which would be tedious and erroneous to use by operating the remote control associated with the smart tv.

In many embodiments, the cloud service stores and provides private digital content of the user. The private digital content may comprise photos or videos captured by the user, e.g. during leisure time or on vacation. The private digital content may also comprise professional content, e.g. textual reports, statistical graphs, presentation slides and the like.

Another object of the invention is a computer program product for accessing a digital content via a smart tv, comprising a storage medium with a program code for implementing a tv service agent. The storage medium may be any device capable of storing a code of a computer program, i.e. a software, and being accessed and executed by a processor of a computer. The storage medium may comprise a CD, a DVD, a USB stick, a memory chip, a hard disk or a cloud space to name only a few. The tv service agent is associated with the smart tv and provides the smart tv with a tv home page.

According to the invention the program code causes a computer, together with a cloud service, a mobile device and a smart tv, to carry out a method according to the invention as the tv service agent when being executed by a processor of the computer. The program code causes the inventive tv service agent to involve usage a mobile device for authentication purposes. Usage of the mobile device is easier and more comfortable than usage of a remote control associated with the smart tv.

It is an essential advantage of the method according to the invention that the user can easily and comfortably authenticate towards a cloud service and have a digital content provided by the cloud service displayed on a screen of a smart tv instead of a screen of the mobile device. Accordingly, usage of the smart tv is facilitated and extended.

Further advantages and configurations of the invention become apparent from the following description and the enclosed drawings.

It shall be understood that the features described previously and to be described subsequently may be used not only in the indicated combinations but also in different combinations or on their own without leaving the scope of the present invention.

The invention is described in detail by means of two exemplary embodiments and with reference to the drawings. Like components are are indicated by like reference numerals throughout the drawings.
- Fig. 1: schematically shows a block diagram of a configuration according to a first embodiment of the invention for accessing a digital content via a smart tv;
- Fig. 2: schematically shows a block diagram of a configuration according to a second embodiment of the invention for accessing a digital content via a smart tv.

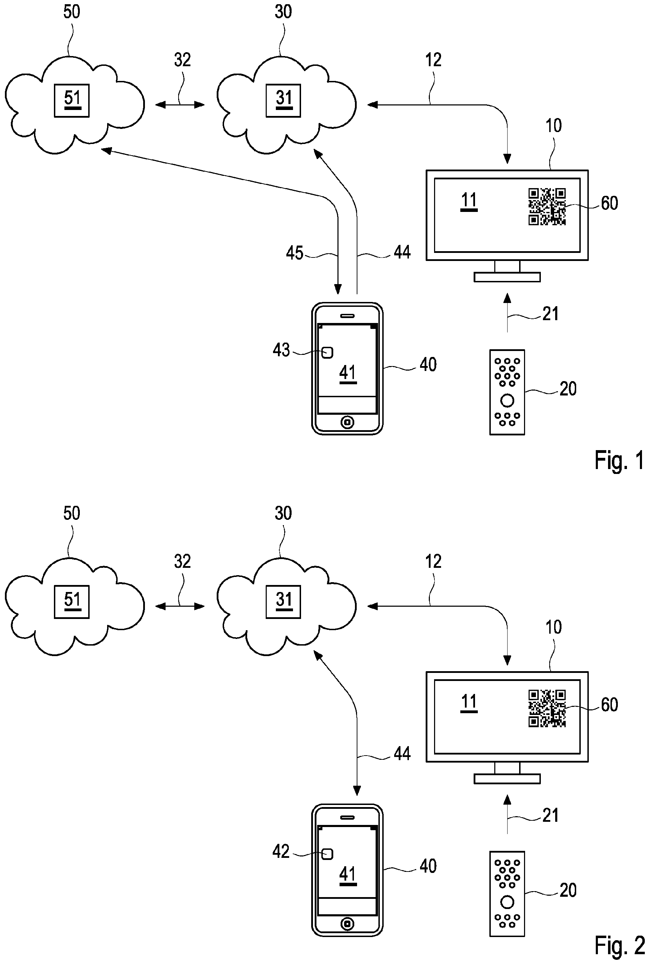

Fig. 1 schematically shows a block diagram of a system according to a first embodiment of the invention for accessing a digital content via a smart tv 10. The system comprises a smart tv 10 having a screen 11 for displaying a digital content and a remote control 20 associated with the smart tv 10. The remote control 20 is configured for remotely operating the smart tv 10, i.e. the remote control 20 has a communication interface for wirelessly, e.g. by infrared light, transmitting a command to the smart tv 10. The system may alternatively comprise a set top box (STB) and a tv as the smart tv 10 wherein the remote control 20 is associated with the set top box.

The system further comprises a tv service cloud 30 and a tv service agent 31 provided by the tv service cloud 30. The tv service agent 31 may implement OAuth. The smart tv 10 is configured for establishing a service connection 12 to the tv service cloud 30, i.e. the tv service agent 31. The connection 12 may be at least partially wireless. For example, the connection 20 may comprise a WLAN connection to a (not shown) WLAN router arranged within a WLAN range from the smart tv 10 and a wired connection between the WLAN router and the tv service cloud 30.

The system further comprises a mobile device 40, e.g. a smart phone, a tablet, a notebook or the like, having a screen 41 and a specific app 43 installed on the mobile device 40 and associated with a cloud service 51. The app 43 is configured for displaying a digital content provided by the cloud service 51 on the screen 41 when a user of the mobile device 40, i.e. the app 43, is logged in the cloud service 51.

The system also comprises a service cloud 50 providing the cloud service 51. The cloud service may, e.g., be a pet tracker service showing a position of a pet, particularly a dog, in a map. The mobile device 40 is configured for establishing both a connection 44 to the tv service cloud 30, i.e. the tv service agent 31, and a connection 45 to the service cloud 50, i.e. the cloud service 51. Each connection 44, 45 may be at least partially wireless. For example, the connection 44, 45 may comprise a WLAN connection to a (not shown) WLAN router arranged within a WLAN range from the mobile device 40 and a wired connection between the WLAN router and the tv service cloud 30 and the service cloud 50, respectively.

The system carries out the following method in order to access a digital content via the smart tv 10. Particularly, the tv service agent 31 may be created by means of a computer program product for accessing the digital content via the smart tv 10. The computer program product comprises a storage medium with a program code for implementing the tv service agent 31. The program code causes a computer, together with the cloud service 51, the mobile device 40 and the smart tv 10, to carry out the following method as the tv service agent 31 when being executed by a processor of the computer.

A digital content provided by the cloud service 51 and requiring an authentication of the user is selected by the user from a tv home page displayed on the screen 11 of the smart tv 10 of the user with the remote control 20 associated with the smart tv 10. The cloud service 51 may store and provide private digital content of the user.

The tv service agent 31 of the smart tv 10, upon the user's selection, automatically provides the cloud service 51 with an authenticating token associated with the user and the selected digital content. The tv service agent 31 may cooperate with a plurality of different cloud services 51 each providing digital content for being selected by the user and being displayed on the screen 11 of the smart tv 10.

The smart tv 10, upon a successful authentication, accesses the selected digital content and displays the digital content on the screen 11. The digital content being displayed on the screen 11 of the smart tv 10 may be reduced as compared to a corresponding digital content being displayed on the screen 41 of the mobile device 40.

The tv service agent 31, at least upon a first selection of the digital content, is provided with the authenticating token by operating the mobile device 40 of the user, i.e. by the user operating the mobile device 40. Operating the mobile device 40 of the user comprises capturing a QR code 60 displayed on the screen 11 of the smart tv 10. The QR code 60 may be generated by the tv service agent 31 wherein the tv service agent 31 preferably generates the QR code 60 as a unique QR code comprising an enriched URL.

The QR code 60 is captured by the specific app 43 installed on the mobile device 40 and associated with the cloud service 51 for accessing the digital content and the specific app 43 automatically transmits authenticating data of the logged-in user via connection 44 to the tv service agent 31, i.e. when the specific app 43 is logged in the cloud service 51 via connection 45.

The specific app 43 may require the user to manually enter additional authenticating data and automatically transmit the additional authenticating data to the tv service agent 31.

When both the smart tv 10 and the mobile device 40 are simultaneously and wirelessly connected to a single WLAN provided by the (not shown) WLAN router the tv service agent 31 may verify the received authenticating data by comparing an IP address of the smart tv 10 and an IP address of the mobile device 40. Particularly, the tv service agent 31 allows for displaying the digital content on the screen 11 of the smart tv 10 if and only if both the smart tv 10 and the mobile device are 40 connected to a single WLAN.

The authenticating token may be renewed after a predetermined period by operating the mobile device 40, i.e. by the mobile device 40 capturing a QR code 60 displayed on the screen 11 of the smart tv 10.

Fig. 2 schematically shows a block diagram of a system according to a second embodiment of the invention for accessing a digital content via a smart tv 10. The system corresponds to the system shown in fig. 1. However, the system comprises a generic app for capturing a QR code, i.e. a generic QR code capturing app 42.

The QR code 60 is captured by the generic QR code capturing app 42 installed on the mobile device 40. The generic QR code capturing app 42 opens an internet browser installed on the mobile device 40 displaying an authentication page of the tv service agent 31 located by the QR code 60 and the user transmits authenticating data to the tv service agent 31 by manually entering the authenticating data on the authentication page. In other words, a specific app needs not to be used in the method, i.e. the user needs not to log in the cloud service 51 for authentication.

### Reference numerals

- 10: smart tv, set top box
- 11: screen
- 12: connection
- 20: remote control
- 21: wireless connection
- 30: tv service cloud
- 31: tv service agent
- 32: content connection
- 40: mobile device
- 41: screen
- 42: generic QR code capturing app
- 43: specific app
- 44: connection
- 45: connection
- 50: app cloud
- 51: cloud service
- 60: QR-Code

## Claims

1. A method for accessing a digital content via a smart tv (10), comprising the steps:
- a digital content provided by a cloud service (51) and requiring an authentication of a user is selected by the user from a tv home page displayed on a screen (11) of a smart tv (10) of the user by operating a remote control (20) associated with the smart tv (10);
- a tv service agent (31) associated with the smart tv (10), upon the user's selection, automatically provides the cloud service (51) with an authenticating token associated with the user and the selected digital content;
- the smart tv (10), upon a successful authentication, accesses the selected digital content and displays the digital content on the screen (11); and
- the tv service agent (31), upon a first selection of the digital content, is provided with the authenticating token by operating a mobile device (40) of the user.

2. The method according to claim 1, wherein a system comprising a set top box and a tv carry out the method together as the smart tv (10).

3. The method according to claim 1 or 2, wherein operating the mobile device (40) of the user comprises capturing a QR code (60) displayed on the screen (11) of the smart tv (10).

4. The method according to claim 3, wherein the QR code (60) is captured by a generic QR code capturing app (42) installed on the mobile device (40), the generic QR code capturing app (42) opens an internet browser installed on the mobile device (40) displaying an authentication page of the tv service agent (31) located by the QR code (60) and the user transmits authenticating data to the tv service agent (31) by manually entering the authenticating data on the authentication page.

5. The method according to claim 3, wherein the QR code (60) is captured by a specific app (43) installed on the mobile device (40) and associated with the cloud service (51) for accessing the digital content and the specific app (43) automatically transmits authenticating data of the logged-in user to the tv service agent (31).

6. The method according to claim 5, wherein the specific app (43) requires the user to manually enter additional authenticating data and automatically transmits the additional authenticating data to the tv service agent (31).

7. The method according to one of claims 4 to 6, wherein both the smart tv (10) and the mobile device (40) are simultaneously and wirelessly connected to a single WLAN and the tv service agent (31) verifies the received authenticating data by comparing an IP address of the smart tv (10) and an IP address of the mobile device (40).

8. The method according to one of claims 3 to 7, wherein the QR code (60) is generated by the tv service agent (31).

9. The method according to claim 8, wherein the tv service agent (31) generates the QR code (60) as a unique QR code comprising an enriched URL.

10. The method according to one of claims 1 to 9, wherein the tv service agent (31) allows for displaying the digital content on the screen (11) of the smart tv (10) if and only if both the smart tv (10) and the mobile device are (40) connected to a single WLAN.

11. The method according to one of claims 1 to 10, wherein the authenticating token is renewed after a predetermined period by operating the mobile device (40).

12. The method according to one of claims 1 to 11, wherein the tv service agent (31) cooperates with a plurality of different cloud services (51) each providing digital content for being selected by the user and being displayed on the screen (11) of the smart tv (10).

13. The method according to one of claims 1 to 12, wherein the digital content being displayed on the screen (11) of the smart tv (10) is reduced as compared to a corresponding digital content being displayed on a screen (41) of the mobile device (40).

14. The method according to one of claims 1 to 13, wherein the cloud service (51) stores and provides private digital content of the user.

15. A computer program product for accessing a digital content via a smart tv (10), comprising a storage medium with a program code for implementing a tv service agent (31), the program code causing a computer, together with a cloud service (51), a mobile device (40) and a smart tv (10), to carry out a method according to one of claims 1 to 14 as the tv service agent (31) when being executed by a processor of the computer.
